(19) Europäisches Patentamt
European Patent Office
Office européen des brevets

(11) EP 4 657 178 A1

(12) EUROPÄISCHE PATENTANMELDUNG

(43) Veröffentlichungstag:
03.12.2025 Patentblatt 2025/49

(21) Anmeldenummer: 25177869.2

(22) Anmeldetag: 21.05.2025

(51) Internationale Patentklassifikation (IPC):
G05B 13/02 (2006.01)     G05B 19/042 (2006.01)
G05B 19/414 (2006.01)    G05D 7/00 (2006.01)
G05D 16/00 (2006.01)     F02D 41/14 (2006.01)

(52) Gemeinsame Patentklassifikation (CPC):
G05B 19/414; F02D 41/1405; G05B 13/027;
F02D 41/2467; G05B 19/0426; G05D 7/00;
G05D 16/00

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH LA MA MD TN

(30) Priorität: 27.05.2024 DE 102024204896

(71) Anmelder: Robert Bosch GmbH
70442 Stuttgart (DE)

(72) Erfinder:
• Ommert, Peter
63741 Aschaffenburg (DE)
• Martin, Johanna
97264 Helmstadt (DE)

(54) **COMPUTERIMPLEMENTIERTES VERFAHREN ZUM TRAINIEREN EINES KÜNSTLICHEN NEURONALEN NETZWERKS FÜR DIE STEUERUNG EINES ELEKTRONISCHEN VENTILS IN EINEM HYDRAULISCHEN SYSTEM**

(57) Die Erfindung betrifft ein computerimplementiertes Verfahren zum Trainieren eines künstlichen neuronalen Netzwerks (10) für die Steuerung eines elektronischen Ventils in einem hydraulischen System, wobei das Ventil eine Steuereinheit umfasst, wobei das Verfahren die Schritte umfasst:

- Erfassen einer Kennlinie für ein Ventil, wobei die Kennlinie die Beziehung zwischen einer Steuergröße des Ventils und Sollwerten einer Systemgröße des hydraulischen Systems repräsentiert;
- Bereitstellen von Trainingsdaten aus der Kennlinie (S10);
- Initialisieren eines künstlichen neuronalen Netzwerks (S12, 10);
- Trainieren des künstlichen neuronalen Netzwerks (S14, 10) mit den Trainingsdaten, wobei das künstliche neuronale Netzwerk (10) dazu eingerichtet ist, einen Sollwert für die Systemgröße des hydraulischen Systems als Eingabe (12) zu empfangen, und darauf trainiert wird, zumindest einen Wert (20) für die Steuergröße des Ventils auszugeben; und
- Bereitstellen des trainierten künstlichen neuronalen Netzwerks (S16, 10) für die Steuerung des Ventils durch die Steuereinheit.

Fig. 2

**Beschreibung**

Die Erfindung betrifft das Gebiet der Ventilsteuerung in hydraulischen Systemen, insbesondere unter Verwendung von Algorithmen des maschinellen Lernens.

Stand der Technik

Der Aufbau digitaler Ventile umfasst eine digitale Elektronikeinheit, die in der Lage ist, die ein Ventil entsprechend seiner Stromkurve individuell anzusteuern. Dieser Prozess erfordert eine detaillierte Berücksichtigung verschiedener Randparameter, wie beispielsweise Offset-Anpassungen in der Strom- und Druckrichtung je nach Ventilfamilie. Die Digitalisierung ermöglicht eine präzisere Steuerung, da die Stromkurve spezifisch jedes einzelne Ventils berücksichtigt werden kann.

Digitale Ventile sind gegenüber analogen Ventilen in Bezug auf die Präzision und Anpassungsfähigkeit überlegen. Ihre Funktion und Struktur sind auf eine präzisere Steuerung des Fluidflusses ausgelegt. Im Gegensatz zu analogen Ventilen, bei denen eine Standardkorrekturkurve für alle Ventile angewendet wird, ermöglichen digitale Ventile eine individuelle Anpassung der Stromkurve für jedes Ventil.

Die Funktionsweise digitaler Ventile beruht auf der Fähigkeit, den Zusammenhang zwischen dem Magnetstrom und dem resultierenden Druck im übergeordneten hydraulischen System präzise zu regeln. Dieser Zusammenhang ist jedoch nicht linear und variiert je nach Druckstufe und Produktfamilie. Daher ist es entscheidend, diese nicht-linearen Effekte durch entsprechende Kompensationsmaßnahmen zu minimieren. Um die charakteristische Kennlinie eines digitalen Ventils zu ermitteln, werden Druck-Ist-Werte sowie der Magnetstrom gemessen. Eine manuelle Erfassung dieser Kennlinie ist zeitaufwendig und ungenau, weshalb automatisierte Messverfahren bevorzugt werden. Diese automatisierten Verfahren bieten eine hohe Genauigkeit und Zuverlässigkeit, insbesondere im Hinblick auf die Druckregelung.

Im Kontext von digitalen Ventilen bezieht sich der Begriff "Magnetstrom" auf den elektrischen Strom, der benötigt wird, um einen Magnet im Ventil zu aktivieren und zu steuern. Der Magnetstrom ist daher entscheidend für die Bewegung des Magnetventils, das den Fluss eines hydraulischen Fluids durch das Ventil regelt.

Der Magnetstrom wird durch eine digitale Elektronikeinheit des Ventils, im Folgenden als Steuereinheit bezeichnet, gesteuert und kann je nach den Anforderungen der Anwendung und den externen Bedingungen variieren. Eine präzise Steuerung des Magnetstroms ist von entscheidender Bedeutung, um den gewünschten Druck oder Fluidfluss im übergeordneten hydraulischen System zu erreichen und aufrechtzuerhalten.

Im Zusammenhang mit der nicht-linearen Beziehung zwischen Magnetstrom und Druck ist eine genaue Kenntnis und Kontrolle des Magnetstroms unerlässlich, um mögliche Abweichungen oder nicht-lineare Effekte zu kompensieren und eine optimale Druckregelung zu gewährleisten.

In aktuellen Serien von digitalen Ventilen besteht jedoch keine Möglichkeit, umfassende Anpassungen der gesamten Kennlinie durchzuführen. Derzeit findet lediglich eine Abstimmung an fest vorgegebenen Druckwerten mit Abhängigkeit der Druckstufe statt. Dadurch können einige Eigenschaften der Kennlinie nicht dargestellt werden.- Dies unterstreicht die Notwendigkeit einer kontinuierlichen Weiterentwicklung digitaler Ventile, um den steigenden Anforderungen an Präzision und Flexibilität gerecht zu werden.

Der Erfindung liegt somit die Aufgabe zugrunde, ein Verfahren vorzuschlagen, mit dem digitale Ventile präziser gesteuert werden können.

Die Aufgabe wird gelöst durch die Gegenstände der unabhängigen Ansprüche.

Offenbarung der Erfindung

Gemäß einem ersten Aspekt der Erfindung wird diese Aufgabe gelöst durch ein computerimplementiertes Verfahren zum Trainieren eines künstlichen neuronalen Netzwerks für die Steuerung eines elektronischen Ventils in einem hydraulischen System. Das Ventil umfasst eine Steuereinheit.

Das Verfahren umfasst die Schritte:

- Erfassen einer Kennlinie für ein Ventil, wobei die Kennlinie die Beziehung zwischen einer Steuergröße des Ventils und Sollwerten einer Systemgröße des hydraulischen Systems repräsentiert;
- Bereitstellen von Trainingsdaten aus der Kennlinie;
- Initialisieren eines künstlichen neuronalen Netzwerks;
- Trainieren des künstlichen neuronalen Netzwerks mit den Trainingsdaten, wobei das künstliche neuronale Netzwerk dazu eingerichtet ist, einen Sollwert für die Systemgröße des hydraulischen Systems als Eingabe zu empfangen, und darauf trainiert wird, zumindest einen Wert für die Steuergröße des Ventils auszugeben; und
- Bereitstellen des trainierten künstlichen neuronalen Netzwerks für die Steuerung des Ventils durch die Steuereinheit.

Im Rahmen dieser Erfindung werden die Begriffe Systemgröße und Steuergröße verwendet.

Die Systemgröße beschreibt einen physikalischen Parameter des Systems, der zur Erfüllung bestimmter Aufgaben oder Funktionen des Systems relevant ist. Sie kann durch Ansteuerung des Systems beeinflusst und geändert werden, um bestimmte Zielgrößen zu erreichen. Ein Beispiel hierfür ist der Druck in einem hydraulischen System. Der Druck ist entscheidend für die Leistung und Effizienz des hydraulischen Systems und muss entsprechend gesteuert werden, um die gewünschten Ergebnisse zu erzielen.

Im Gegensatz dazu ist die Steuergröße ein physikalischer Parameter, der dazu dient, eine Komponente des Systems anzusteuern oder zu regulieren. Das System reagiert auf die Steuergröße, indem sich seine Systemgrößen entsprechend der Ansteuerung anpassen. Anders als die Systemgröße hat die Steuergröße oft keine unmittelbare Relevanz für den eigentlichen Arbeitsprozess des Systems. Beispielsweise ist der Magnetstrom für ein digitales Ventil eine Steuergröße, die dazu verwendet wird, einen Magnet im Ventil zu bewegen und so den Fluss des Fluids zu regulieren. Der Magnetstrom beeinflusst direkt die Funktion des Ventils, hat aber keine direkte Auswirkung auf die Leistung oder Funktion des Systems als Ganzes, sondern dient lediglich der Steuerung und Anpassung einer spezifischen Komponente.

Die Kennlinie im Kontext der vorliegenden Erfindung repräsentiert die Beziehung zwischen einer Steuergröße, die das Verhalten des Ventils beeinflusst, und den Sollwerten einer Systemgröße, die die Leistung oder Funktion des hydraulischen Systems bestimmen.

Konkret beschreibt die Kennlinie, wie sich die Einstellungen oder Ansteuerungen des Ventils, typischerweise durch eine Steuergröße wie den Magnetstrom, auf die gewünschten Sollwerte einer Systemgröße, wie beispielsweise den Druck im hydraulischen System, auswirken. Sie zeigt also, wie das Ventil auf verschiedene Steuereingaben reagiert und welche Auswirkungen dies auf die Leistung oder Funktion des gesamten Systems hat.

Die Kennlinie kann grafisch dargestellt werden, wobei auf der horizontalen Achse die entsprechenden Sollwerte der Systemgröße (z. B. der Druck) und auf der vertikalen Achse die Steuergröße (z. B. der Magnetstrom) aufgetragen werden. Anhand dieser Kennlinie kann ein Wert für die Steuergröße ermittelt werden, der zur Erreichung eines bestimmten Sollwertes der Systemgröße benötigt wird.

Eine präzise und gut verstandene Kennlinie ist entscheidend für die effektive Steuerung und Regelung hydraulischer Systeme, da sie es ermöglicht, das Ventil so einzustellen, dass die gewünschten Sollwerte der Systemgröße unter verschiedenen Betriebsbedingungen erreicht werden können. Aufgrund von Toleranzen bei der Herstellung eines Ventils und seiner Komponenten unterscheiden sich die Kennlinien von Ventil zu Ventil.

Aus der Kennlinie des Ventils werden Trainingsdaten erzeugt. Es kann ausreichen, nur definierte Sollwerte der Systemgröße und die ihnen entsprechenden Steuergrößen zum Trainieren zu verwenden. Grundsätzlich gilt, dass ein Trainingsdatensatz mit geringem Umfang ein schnelleres Training ermöglicht. Allerdings führen umfangreichere Trainingsdaten häufig auch zu präziseren Trainingsergebnissen. Insgesamt ist daher eine Balance aus Trainingsgeschwindigkeit und Präzision zu finden.

Zur Steuerung des Ventils wird ein künstliches neuronales Netzwerk verwendet, das gemäß diesem Aspekt der Erfindung trainiert wird. Die Grundbausteine des neuronalen Netzwerks sind Knoten, auch als Neuronen bezeichnet. Jeder Knoten empfängt Eingaben, verarbeitet sie und gibt eine Ausgabe weiter. Diese Ausgabe kann wiederum als Eingabe für andere Knoten dienen. Die Verbindungen zwischen den Knoten sind gewichtet, was bedeutet, dass jede Verbindung ein Gewicht hat, das die Stärke der Beziehung zwischen den Knoten darstellt. Diese Gewichte werden im nächsten Schritt, während des Trainings des Netzwerks, angepasst, um die gewünschten Ausgaben zu erzeugen.

Die Knoten sind in Schichten organisiert. Ein typisches künstliches neuronales Netzwerk besteht aus einer Eingabeschicht, einer oder mehreren versteckten Schichten und einer Ausgabeschicht. Die Eingabeschicht empfängt die Eingabedaten, die Ausgabeschicht gibt die Ergebnisse aus, und die versteckten Schichten führen die eigentliche Datenverarbeitung durch.

Bei der Vorwärtspropagierung fließen Eingabedaten durch das Netzwerk und werden Schicht für Schicht verarbeitet, bis schließlich eine Ausgabe erzeugt wird. Dies geschieht, indem die gewichteten Verbindungen und die Aktivierungsfunktionen jedes Neurons angewendet werden.

Während des Trainings werden die Gewichte der Verbindungen im Netzwerk angepasst, um die Abweichung zwischen den tatsächlichen und den gewünschten Ausgaben zu minimieren. Dies geschieht durch Rückwärtspropagierung des Fehlers durch das Netzwerk und die Anpassung der Gewichte mithilfe von Optimierungsalgorithmen wie dem Gradientenabstiegsverfahren. Die Verlustfunktion quantifiziert die Abweichung zwischen den tatsächlichen Ausgaben des Netzwerks und den gewünschten Ausgaben während des Trainings. Das Ziel des Trainings besteht darin, diese Verlustfunktion zu minimieren. Die Wahl der korrekten Verlustfunktion ist daher von großer Bedeutung.

Das künstliche neuronale Netzwerk der vorliegenden Erfindung wird darauf trainiert, aus einem Sollwert für die Systemgröße einen Wert für die Steuergröße zu ermitteln. Das Ventil reagiert bei einer Ansteuerung mit diesem Wert, woraufhin sich ein Istwert der Systemgröße im hydraulischen System einstellt. Als Verlustfunktion eignet sich daher insbesondere eine Funktion, die den Unterschied zwischen dem Sollwert und dem entsprechenden Istwert der Systemgröße umfasst.

Ist das künstliche neuronale Netzwerk hinreichend mit der Kennlinie bzw. den aus der Kennlinie erwachsenen Daten trainiert worden, kann es in die Steuereinheit des Ventils integriert werden und die Steuerung des Ventils übernehmen.

Grundsätzlich kann das Trainieren des künstlichen neuronalen Netzwerks von einer beliebigen, im Übrigen aber geeigneten Recheneinheit, beispielsweise einer Recheneinheit eines PCs, ausgeführt werden. Dies hat den Vorteil, dass für das Training mehr Rechenressourcen bereitgestellt werden können, was den Trainingsprozess beschleunigt.

Insgesamt kann durch ein derartiges Verfahren zum Trainieren eines künstlichen neuronalen Netzwerks dasselbe bereitgestellt werden, um ein Ventil zu steuern. Die automatisierte Erfassung der Kennlinie und das nachgelagerte Trainieren eines Ventilindividuellen künstlichen neuronalen Netzwerks ermöglichen eine präzisere Steuerung, mit der die Schwankungen aufgrund von Produktionstoleranzen im Ventil ausgeglichen werden können.

In einer Ausführungsform umfasst das künstliche neuronale Netzwerk drei Schichten, wobei eine erste Schicht eine Eingabeschicht ist, wobei eine zweite, mittlere Schicht eine Aktivierungsschicht ist, und wobei die dritte Schicht eine Ausgabeschicht ist.

Steuereinheiten für Ventile sind in der Regel mit stark begrenzter Hardware ausgestattet. Die Programme zur Steuerung des Ventils dürfen daher nicht viel Rechenleistung und Speicher benötigen.

Ein gemäß dieser Ausführungsform beschränktes künstliches neuronales Netzwerk bewirkt in vorteilhafter Weise, dass es kompakt und mit der geringen Rechenleistung einer Ventil-Steuereinheit ausgeführt werden kann. Hierbei sei darauf hingewiesen, dass das trainierte künstliche neuronale Netzwerk von der Steuereinheit ausgeführt wird. Das Training des künstlichen neuronalen Netzwerks kann auf einer anderen, rechenstärkeren Maschine durchgeführt werden.

In einer Ausführungsform umfasst die erste Schicht acht Eingabeknoten, wobei die zweite Schicht vier Aktivierungsknoten und die dritte Schicht einen Ausgabeknoten umfassen.

Die Eingabeknoten erhalten die Eingaben, die in das künstliche neuronale Netzwerk eingegeben werden. Der Ausgabeknoten gibt einen Wert aus, der für die Steuerung des Ventils verwendet wird.

Jeder Aktivierungsknoten hat eine Aktivierungsfunktion, die die Ausgabe des Knotens basierend auf seiner Eingabe und den gewichteten Verbindungen berechnet. Die Aktivierungsfunktion führt vorzugsweise eine nicht-lineare Transformation durch, um komplexe Zusammenhänge zwischen den Eingaben zu erfassen.

Komplexere Netzwerke könnten die Eingabedaten möglicherweise präziser berechnen. Tests haben allerdings ergeben, dass die Konfiguration dieser Ausführungsform des künstlichen neuronalen Netzwerks einen guten Kompromiss zwischen der Genauigkeit der Steuerung einerseits und der Komplexität, das heißt, den Hardwareanforderungen durch das künstliche neuronale Netzwerk bildet.

In einer Ausführungsform werden die Eingaben in die Aktivierungsknoten mit einer Aktivierungsfunktion verarbeitet, wobei die Aktivierungsfunktion eine Näherung an eine Sigmoid-Funktion ist.

Eine Sigmoid-Funktion hat die Form

$$f_{sig}(x) = \frac{1}{1+e^{-x}}.$$

Das Berechnen einer e-Funktion ist jedoch aufwendig für die begrenzte Hardware der Steuereinheit des Ventils. Eine Annäherung, insbesondere eine polynomiale Annäherung, kann den Rechenaufwand erheblich senken, sodass die Aktivierungsfunktion auch mit der begrenzten Hardware einer Steuereinheit berechnet werden kann.

Eine Näherungsfunktion kann beispielsweise die Form haben

$$f_{sig_{num}}(x) \begin{cases} \dfrac{1}{1+\left(1-\dfrac{x}{8}\right)^8} & \text{für } x < 5 \\ 1 & \text{sonst.} \end{cases}$$

Diese Näherung ist aufgrund der Approximation $e^x = \lim\limits_{n \to \infty} \left(1 + \dfrac{x}{n}\right)^n$ möglich. Tests haben ergeben, dass die Genauigkeit dieser Approximation bei unter 0,03 liegt.

In einer Ausführungsform umfasst das Initialisieren des künstlichen neuronalen Netzwerks, dass den Gewichten der Knoten zufällige gleichverteilte Werte aus einem definierten Intervall zugewiesen werden.

Für eine Sigmoid-Funktion kann vorzugsweise das Intervall (-r, r) gewählt werden, mit

$$r = \frac{\sqrt{6}}{\sqrt{n_i + n_{i+1}}},$$

wobei $n_i$ die Anzahl n der Knoten in der i-ten Schicht ist. Für ein künstliches neuronales Netzwerk, wie es oben für eine Ausführungsform bereits beschrieben wurde, ergibt sich damit:

- $n_0 = 1$, da ein Sollwert für die Systemgröße in das Netzwerk eingegeben wird.
- $n_1 = 8$, für die 8 Eingangsknoten,
- $n_2 = 4$ für die 4 Aktivierungsknoten und
- $n_3 = 1$ für den einen Ausgangsknoten, der den Wert für die Steuergröße darstellt.

In einer Ausführungsform sind die Schichten des künstlichen neuronalen Netzwerks voll miteinander verbunden.

Schichten in einem künstlichen neuronalen Netzwerk, die voll miteinander verbunden sind, werden auch als fully-connected Layer bezeichnet.

Ein "fully-connected Layer" ist eine grundlegende Komponente in künstlichen neuronalen Netzwerken, die auch als Dense-Layer oder Fully-Connected Neural Network bezeichnet wird. In einer voll miteinander verbundenen Schicht sind alle Knoten der Schicht mit allen Knoten der vorherigen Schicht verbunden, was bedeutet, dass jede Eingabe mit jeder Gewichtung zu jedem Knoten in dieser Schicht verbunden ist.

Voll miteinander verbundene Schichten bieten einige wesentliche Vorteile gegenüber anderen Schicht-Typen in einem künstlichen neuronalen Netzwerk. Da jeder Knoten einer Schicht mit jedem Knoten in der vorherigen Schicht verbunden ist, wird eine hohe Flexibilität bei der Modellierung komplexer Zusammenhänge in den Daten gewährleistet. Diese vollständige Konnektivität ermöglicht es dem Netzwerk, eine breite Palette von Mustern und Merkmalen in den Daten zu erfassen. Damit kann den unterschiedlichen Ursprüngen für die unterschiedlichen Kennlinien besser Rechnung getragen werden.

Im Vergleich zu anderen Schichten sind voll miteinander verbundene Schichten in Bezug auf ihre Struktur und Funktionsweise relativ einfach. Dies erleichtert die Implementierung und das Verständnis des verwendeten künstlichen neuronalen Netzwerks.

In einer Ausführungsform umfasst das Trainieren des künstlichen neuronalen Netzwerks:

- Erfassen eines Istwerts des Systemparameters; und
- Ermitteln einer Verlustfunktion aus der quadratischen Abweichung des Istwerts des Systemparameters von dem in das künstliche neuronale Netzwerk eingegebenen Sollwert des Systemparameters.

Für das Training wird eine Verlustfunktion verwendet, mit der die Güte des künstlichen neuronalen Netzwerks quantifiziert wird. Hierzu wird ein Istwert der Systemgröße ermittelt, insbesondere gemessen. Ziel der Steuerung des Ventils ist es, einen Wert für die Steuergröße zu ermitteln, mit dem sich der Istwert der Systemgröße auf den Sollwert einstellt. Je näher der Istwert am Sollwert der Systemgröße liegt, desto besser arbeitet das künstliche neuronale Netzwerk hinsichtlich seiner Aufgabe.

Die Verlustfunktion in dieser Ausführungsform kann beispielsweise dargestellt werden mit:

$$f_{verl.} = \left( x - x_{ref} \right)^2,$$

mit x als Sollwert der Systemgröße und $x_{ref}$ als Istwert der Systemgröße.

In einem weiteren Aspekt betrifft die Erfindung ein computerimplementiertes Verfahren zum Bereitstellen von Trainingsdaten für das Trainieren eines künstlichen neuronalen Netzwerks, wie voranstehend beschrieben, wobei das Verfahren umfasst:

- Erfassen von Werten einer Steuergröße des hydraulischen Systems für definierte Sollwerte einer Systemgröße; und
- Ermitteln einer Kennlinie des Ventils, wobei die Kennlinie die Beziehung zwischen einer Steuergröße des Ventils und Sollwerten einer Systemgröße des hydraulischen Systems repräsentiert, wobei die Kennlinie aus den erfassten Werten der Steuergröße ermittelt wird.

Je nach Wahl der Systemgröße kann es sein, dass diese nicht direkt messbar ist. In diesem Fall muss die Kennlinie aus den Messdaten erst extrahiert werden. Welche physikalische Größe als Systemgröße verwendet wird, kann von der Aufgabe des hydraulischen Systems und/oder der Funktion des Ventils abhängen.

Darüber hinaus erzeugen unterschiedliche Sensoren unterschiedliche Ausgangsgrößen, auch wenn sie grundsätzlich denselben Parameter messen. Die Unterschiede können sich beispielsweise aus unterschiedlichen Abtastraten, unterschiedlichen Messgenauigkeiten oder sogar unterschiedlichen Messverfahren ergeben. Die unterschiedlich verwendeten Sensoren sollten aber die Systemgröße als eine einheitliche physikalische Größe angeben. Wie die Systemgröße durch den Sensor bestimmt wird, sollte am Ergebnis wenig ändern.

Zwei oder mehr Messungen müssen gegebenenfalls vergleichbar sein, sodass dasselbe Netzwerk mit Daten von unterschiedlichen Sensoren und gegebenenfalls für unterschiedliche Ventile vergleichbare Ergebnisse produziert. Um dies zu erreichen, wird in dieser Ausführungsform eine Kennlinie aus den erfassten Werten ermittelt. Ferner kann dadurch gesteuert werden, wie umfangreich der Trainingsdatensatz wird.

In einem weiteren Aspekt betrifft die Erfindung ein computerimplementiertes Verfahren zur Steuerung eines Ventils in einem hydraulischen System unter Verwendung eines künstlichen neuronalen Netzwerks. Das Ventil umfasst eine Steuereinheit und das Verfahren umfasst die Schritte:

- Bereitstellen eines künstlichen neuronalen Netzwerks durch die Steuereinheit;
- Eingeben eines Sollwerts für eine Systemgröße des hydraulischen Systems in das künstliche neuronale Netzwerk;
- Ermitteln zumindest eines Werts für die Steuergröße des Ventils; und
- Erzeugen der Steuergröße zum Steuern des Ventils.

Ist das künstliche neuronale Netzwerk trainiert, kann es über die Steuereinheit zur Steuerung des Ventils verwendet werden. Die Verwendung des künstlichen neuronalen Netzwerks kann beispielsweise die Folgende sein: Eine Steuereinrichtung des hydraulischen Systems erzeugt eine Vorgabe für den Wert der Systemgröße. Dieser Wert wird als Sollwert der Systemgröße in das künstliche neuronale Netzwerk eingegeben. Das künstliche neuronale Netzwerk verarbeitet den Sollwert mit den im Training konfigurierten Knoten und erzeugt einen Wert für die Steuergröße. Der Wert für die Steuergröße kann direkt oder indirekt von der entsprechenden Komponente des hydraulischen Systems genutzt werden, um das Ventil zu steuern. Diese Komponente kann beispielsweise ein Elektromotor, eine Spule zur Aktivierung eines Elektromagneten oder eine andere geeignete elektronische Komponente sein.

Gegebenenfalls kann der ausgegebene Wert für die Steuergröße von elektronischen Zwischenkomponenten wie Verstärkern, Filtern und Ähnlichem weiterverarbeitet werden, bevor er für die Steuerung des Ventils verwendet wird.

In einer Ausführungsform ist die Steuereinheit eine mit dem Ventil kommunikativ verbundene Recheneinheit.

Auch die Verwendung eines neuronalen Netzwerks kann rechenaufwendig sein. Durch die Steuerung des Ventils durch eine mit dem Ventil kommunikativ verbundene Recheneinheit können Rechenressourcen innerhalb des Ventils reduziert werden. Die Rechenressourcen zum Steuern werden daher aus dem Ventil auf beispielsweise eine allgemeine oder zentrale Recheneinheit ausgelagert. In einer weiteren Ausführungsform kann diese Recheneinheit dazu ausgebildet sein, mehrere Ventile parallel zu steuern.

In einer Ausführungsform umfasst die zumindest eine Systemgröße den Druck im hydraulischen System hinter dem Ventil, vor dem Ventil oder in dem Ventil.

Der Druck ist eine Systemgröße, die unmittelbar von einem Drucksensor bestimmbar ist. Ferner ist der Druck in hydraulischen Systemen oft eine sicherheitsrelevante Größe, da bei manchen hydraulischen Systemen zu hoher Druck zu einer Beschädigung des Systems führen kann.

In einer Ausführungsform ist der Fluss durch das Ventil mittels eines Magneten steuerbar, wobei die zumindest eine Steuergröße einen Magnetstrom zum Steuern des Ventils umfasst.

Elektromagnetische Ventile werden häufig in hydraulischen Systemen verbaut, da diese eine leckfreie Bauart ermöglichen. Zur Steuerung des Ventils wird ein magnetisches Element verwendet, dessen Position durch einen eine Steuerung des Stroms eines Elektromagneten, insbesondere einer Spule, steuerbar ist. Der Strom in einem solchen Elektromagneten wird als Magnetstrom bezeichnet und hängt stark mit dem Schaltzustand des Ventils zusammen. Der Magnetstrom wird in diesem Fall als Steuergröße bezeichnet.

In Kombination mit dem Druck als Systemgröße kann eine Kennlinie des Ventils eine Druck-Strom-Kennlinie sein, bei der der benötigte Magnetstrom gegen den Sollwert des Drucks aufgetragen ist. Das heißt, zu einem vorgegebenen Soll-Druck erzeugt die Steuerung des Ventils einen bestimmten Wert für den Magnetstrom, der das Ventil steuert, was wiederum den Druck vor, hinter und/oder im Ventil ändert.

In einem weiteren Aspekt betrifft die Erfindung ein Computerprogramm mit Programmcode, um ein Verfahren zum Trainieren eines künstlichen neuronalen Netzwerks wie voranstehend beschrieben oder ein Verfahren zur Steuerung eines Ventils in einem hydraulischen System unter Verwendung eines künstlichen neuronalen Netzwerks wie voranstehend beschrieben auszuführen, wenn das Computerprogramm auf einem Computer ausgeführt wird.

[In einem weiteren Aspekt betrifft die Erfindung einen computerlesbaren Datenträger mit Programmcode eines Computerprogramms, um ein Verfahren zum Trainieren eines künstlichen neuronalen Netzwerks wie voranstehend beschrieben oder ein Verfahren zur Steuerung eines Ventils in einem hydraulischen System unter Verwendung eines künstlichen neuronalen Netzwerks wie voranstehend beschrieben auszuführen, wenn das Computerprogramm auf einem Computer ausgeführt wird.

In einem weiteren Aspekt betrifft die Erfindung ein System zum Trainieren eines künstlichen neuronalen Netzwerks, wobei das System ausgebildet ist, ein Verfahren zum Trainieren wie voranstehend beschrieben auszuführen.

In einem weiteren Aspekt betrifft die Erfindung eine Steuereinheit zur Steuerung eines Ventils in einem hydraulischen System unter Verwendung eines künstlichen neuronalen Netzwerks, wobei die Steuereinheit ausgebildet ist, ein Verfahren zur Steuerung wie voranstehend beschrieben auszuführen.

Insgesamt werden somit ein Verfahren zum Trainieren eines künstlichen neuronalen Netzwerks, ein Verfahren zum Bereitstellen von Trainingsdaten, ein Verfahren zur Steuerung eines Ventils unter Verwendung eines künstlichen neuronalen Netzwerks, ein Computerprogrammprodukt zur Ausführung der vorgenannten Verfahren, ein computerlesbarer Datenträger mit einem entsprechenden Computerprogrammprodukt, ein System zum Trainieren des künstlichen neuronalen Netzwerks und eine Steuereinheit für ein Ventil angegeben.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:

Fig. 1 schematisch den Ablauf des Verfahrens gemäß einer Ausführungsform zum Trainieren eines künstlichen neuronalen Netzwerks; und

Fig. 2 schematisch die Architektur eines beispielhaften künstlichen neuronalen Netzwerks.

In den Figuren der Zeichnungen bezeichnen gleiche Bezugszeichen gleiche oder funktionsgleiche Elemente, Bauteile oder Komponenten, soweit nichts Gegenteiliges angegeben ist.

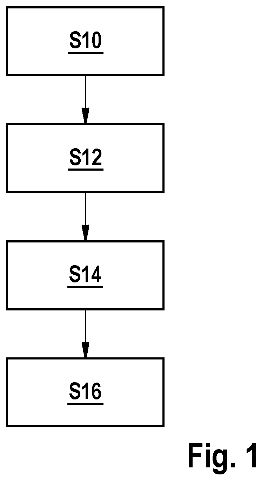

Fig. 1 zeigt schematisch den Ablauf des Verfahrens zum Trainieren eines künstlichen neuronalen Netzwerks gemäß einer Ausführungsform.

Das Verfahren beginnt in Schritt S10 damit, dass Trainingsdaten aus einer Kennlinie für das Ventil bereitgestellt werden. Die Kennlinie stellt eine für jedes Ventil individuelle Beziehung zwischen einem Sollwert einer Systemgröße in dem hydraulischen System und der Steuergröße des Ventils dar.

Die Systemgröße kann beispielsweise der Druck im hydraulischen System sein, wobei die Steuergröße ist der Magnetstrom, der angelegt wird, um das Ventil über eine magnetische Kopplung zu öffnen oder zu schließen. Gegebenenfalls wird die Kennlinie nicht nur einfach durch Messen erfasst, sondern zuvor aus umfangreicheren Messdaten errechnet.

In Schritt S12 wird das künstliche neuronale Netzwerk initialisiert. Die Architektur des künstlichen neuronalen Netzwerks darf dabei nicht zu groß gewählt werden, da die Rechenkapazität einer Steuereinheit eines Ventils begrenzt ist. Andererseits darf das Netzwerk nicht zu einfach gehalten sein, da es ansonsten seine Fähigkeit einbüßt, präzise Werte für die Steuergröße auszugeben.

In Schritt S14 wird das künstliche neuronale Netzwerk trainiert. Das Trainieren umfasst eine Forward-Propagation, bei der die Trainingsdaten von dem Netzwerk verarbeitet werden und eine Back-Propagation, bei der die Gewichte der einzelnen Knoten entsprechend dem Ergebnis der Verlustfunktion eingestellt werden.

Im letzten Schritt S16 wird schließlich das trainierte künstliche neuronale Netzwerk bereitgestellt, um von einer Steuereinheit des Ventils verwendet zu werden.

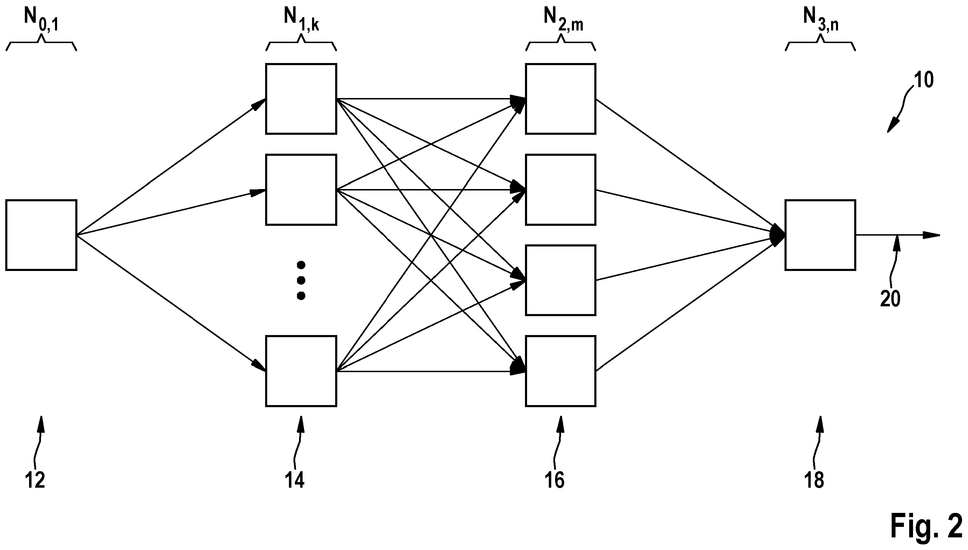

Figur 2 zeigt eine beispielhafte Architektur für ein künstliches neuronales Netzwerk 10, wie es zur Steuerung eines Ventils eingesetzt werden kann.

Das Netzwerk 10 umfasst drei Schichten. Eine Eingabe $N_{0,1}$ wird als nullte (Vor-) Schicht 12 vorangestellt. Sie bezeichnet eine Vorgabe, die beispielsweise von einem Steuergerät eines übergeordneten hydraulischen Systems an das Ventil gestellt wird und umfasst eine Eingabe für den Sollwert der Systemgröße, die zu erreichen oder zu halten ist.

Die nächste Schicht 14 ist die Schicht mit dem Index 1, sodass sie als erste Schicht gezählt wird. Sie umfasst k Knoten $N_{1,k}$, wobei k vorzugsweise gleich acht ist. Jeder der Knoten $N_{1,k}$ verarbeitet seine Eingabe mit einem Gewicht $w_{1,k,1}$. Die dabei verwendete Funktion kann ausgedrückt werden als

$$o_{1,k} = f_{sig_{num}}\left(w_{1,k,1} * x + b_{1,k}\right).$$

Dabei sind $o_{1,k}$ jeweils die Ausgabe des k-ten Knotens in der ersten Schicht, $w_{1,k,1}$ jeweils das Gewicht vom k-ten Knoten der ersten Schicht aus dem einen Eingangswert x. Ferner kann ein Bias-Term $b_{1,k}$ vorgesehen sein. Die Funktion $f_{sig\_num}$ beschreibt die Annäherung an die Sigmoid-Funktion $f_{sig}$, die oben näher ausgeführt wurde.

Die zweite Schicht 16 empfängt die Ausgaben der ersten Schicht 14 und verarbeitet diese weiter. Das Netzwerk 10 umfasst voll miteinander verbundene Schichten, wodurch in jedem der m Knoten $N_{2,m}$ der zweiten Schicht 16 die Ausgabewerte $o_{1,k}$ verarbeitet werden. Jeder Ausgabewert hat ein eigenes Gewicht und einen Bias-Term $b_{2,m}$, sodass sich die Funktion für jeden Knoten $N_{2,m}$ der zweiten Schicht 16 darstellen lässt mit:

$$o_{2,m} = f_{sig_{num}}\left(b_{2,m} + \sum_{k=1}^{8} w_{2,m,k} * o_{1,k}\right).$$

In der dritten Schicht 18 wird mit einem Knoten $N_{3,n}$ (das heißt, im dargestellten Netzwerk ist n=1) ein Ausgabewert für die Steuergröße erzeugt. Dieser wird aus den Ausgaben der m Knoten der zweiten Schicht 16 ermittelt. Die Funktion kann dargestellt werden als

$$y = b_{3,1} + \sum_{m=1}^{4} w_{3,1,4} * o_{2,m}.$$

Dabei ist y der Ausgabewert 20 und $b_{3,1}$ ein weiterer Bias-Term für die dritte Schicht. Eine Aktivierungsfunktion wird in dem Knoten der dritten Schicht nicht verwendet, um weitere Rechenressourcen zu sparen. Dies ist möglich, wenn der Ausgabewert direkt von einer Stromquelle in den Magnetstrom umgesetzt wird.

**Patentansprüche**

1. Computerimplementiertes Verfahren zum Trainieren eines künstlichen neuronalen Netzwerks (10) für die Steuerung eines elektronischen Ventils in einem hydraulischen System, wobei das Ventil eine Steuereinheit umfasst, wobei das Verfahren die Schritte umfasst:

- Erfassen einer Kennlinie für ein Ventil, wobei die Kennlinie die Beziehung zwischen einer Steuergröße des Ventils und Sollwerten einer Systemgröße des hydraulischen Systems repräsentiert;
- Bereitstellen von Trainingsdaten aus der Kennlinie (S10);
- Initialisieren eines künstlichen neuronalen Netzwerks (S12, 10);
- Trainieren des künstlichen neuronalen Netzwerks (S14, 10) mit den Trainingsdaten, wobei das künstliche neuronale Netzwerk (10) dazu eingerichtet ist, einen Sollwert für die Systemgröße des hydraulischen Systems als Eingabe (12) zu empfangen, und darauf trainiert wird, zumindest einen Wert (20) für die Steuergröße des Ventils auszugeben; und
- Bereitstellen des trainierten künstlichen neuronalen Netzwerks (S16, 10) für die Steuerung des Ventils durch die Steuereinheit.

2. Computerimplementiertes Verfahren nach Anspruch 1, wobei das künstliche neuronale Netzwerk (10) drei Schichten (14, 16, 18) umfasst, wobei eine erste Schicht eine Eingabeschicht (14) ist, wobei eine zweite, mittlere Schicht eine Aktivierungsschicht (16) ist, und wobei die dritte Schicht eine Ausgabeschicht (18) ist.

3. Computerimplementiertes Verfahren nach Anspruch 2, wobei die erste Schicht (14) acht Eingabeknoten ($N_{1,k}$) umfasst, wobei die zweite Schicht (16) vier Aktivierungsknoten ($N_{2,m}$) umfasst, und wobei die dritte Schicht (18) einen Ausgabeknoten ($N_{3,1}$) umfasst.

4. Computerimplementiertes Verfahren nach Anspruch 3, wobei die Eingaben in die Aktivierungsknoten ($N_{2,m}$) mit einer Aktivierungsfunktion verarbeitet werden, wobei die Aktivierungsfunktion eine Näherung an eine Sigmoid-Funktion ist.

5. **Computerimplementiertes** Verfahren nach einem der vorangegangenen Ansprüche, wobei das Initialisieren des künstlichen neuronalen Netzwerks (S14, 10) umfasst, dass den Gewichten der Knoten ($N_{1,k}$, $N_{2,m}$, $N_{3,1}$) zufällige Werte aus einem definierten Intervall zugewiesen werden.

6. Computerimplementiertes Verfahren nach einem der vorangegangenen Ansprüche, wobei die Schichten (14, 16, 18) des künstlichen neuronalen Netzwerks (10) voll miteinander verbunden sind.

7. Computerimplementiertes Verfahren nach einem der vorangegangenen Ansprüche, wobei das Trainieren des künstlichen neuronalen Netzwerks (10) umfasst:

- Erfassen eines Istwerts des Systemparameters; und
- Ermitteln einer Verlustfunktion aus der quadratischen Abweichung des Istwerts des Systemparameters von dem in das künstliche neuronale Netzwerk (10) eingegebenen Sollwert (12) des Systemparameters.

8. Computerimplementiertes Verfahren zum Bereitstellen von Trainingsdaten für das Trainieren eines künstlichen neuronalen Netzwerks (10) nach einem der Ansprüche 1 bis 7, wobei das Verfahren umfasst:

- Erfassen von Werten einer Steuergröße des hydraulischen Systems für definierte Sollwerte einer Systemgröße; und
- Ermitteln einer Kennlinie des Ventils, wobei die Kennlinie die Beziehung zwischen einer Steuergröße des Ventils und Sollwerten einer Systemgröße des hydraulischen Systems repräsentiert, wobei die Kennlinie aus den erfassten Werten der Steuergröße ermittelt wird.

9. Computerimplementiertes Verfahren zur Steuerung eines Ventils in einem hydraulischen System unter Verwendung eines künstlichen neuronalen Netzwerks (10),

wobei das Ventil eine Steuereinheit umfasst, wobei das Verfahren die Schritte umfasst:

- Bereitstellen eines künstlichen neuronalen Netzwerks (10) durch die Steuereinheit;
- Eingeben eines Sollwerts (12) für eine Systemgröße des hydraulischen Systems in das künstliche neuronale Netzwerk (10);
- Ermitteln zumindest eines Werts (20) für die Steuergröße des Ventils; und
- Erzeugen der Steuergröße zum Steuern des Ventils.

10. Computerimplementiertes Verfahren nach Anspruch 9, wobei die zumindest eine Systemgröße den Druck im hydraulischen System hinter dem Ventil, vor dem Ventil oder in dem Ventil umfasst.

11. Computerimplementiertes Verfahren nach einem der Ansprüche 9 oder 10, wobei der Fluss durch das Ventil mittels eines Magneten steuerbar ist, wobei die zumindest eine Steuergröße einen Magnetstrom zum Steuern des Ventils umfasst.

12. Computerprogramm mit Programmcode, um ein Verfahren zum Trainieren eines künstlichen neuronalen Netzwerks (10) nach einem der Ansprüche 1 bis 7 oder ein Verfahren zur Steuerung eines Ventils in einem hydraulischen System unter Verwendung eines künstlichen neuronalen Netzwerks (10) nach einem der Ansprüche 9 bis 11 auszuführen, wenn das Computerprogramm auf einem Computer ausgeführt wird.

13. Computerlesbarer Datenträger mit Programmcode eines Computerprogramms, um ein Verfahren zum Trainieren eines künstlichen neuronalen Netzwerks (10) nach einem der Ansprüche 1 bis 7 oder ein Verfahren zur Steuerung eines Ventils in einem hydraulischen System unter Verwendung eines künstlichen neuronalen Netzwerks (10) nach einem der Ansprüche 9 bis 11 auszuführen, wenn das Computerprogramm auf einem Computer ausgeführt wird.

14. System zum Trainieren eines künstlichen neuronalen Netzwerks (10), wobei das System ausgebildet ist, ein Verfahren nach einem der Ansprüche 1 bis 7 auszuführen.

15. Steuereinheit zur Steuerung eines Ventils in einem hydraulischen System unter Verwendung eines künstlichen neuronalen Netzwerks (10), wobei die Steuereinheit ausgebildet ist, ein Verfahren nach einem der Ansprüche 9 bis 11 auszuführen.

S10

S12

S14

S16

# Fig. 1

Fig. 2

Europäisches
Patentamt

European
Patent Office

Office européen
des brevets

**EUROPÄISCHER RECHERCHENBERICHT**

Nummer der Anmeldung

EP 25 17 7869

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | CN 113 028 117 A (NANJING CHENGUANG GROUP CO LTD) 25. Juni 2021 (2021-06-25) * das ganze Dokument * ----- | 1-15 | INV. G05B13/02 G05B19/042 G05B19/414 |
| X | CN 108 717 259 A (CHANGZHOU LANLING AUTOMATION EQUIPMENT CO LTD) 30. Oktober 2018 (2018-10-30) * das ganze Dokument * ----- | 1-15 | ADD. G05D7/00 G05D16/00 F02D41/14 |
| X | US 6 078 843 A (SHAVIT GIDEON [US]) 20. Juni 2000 (2000-06-20) * Spalte 3, Zeile 25 - Spalte 8, Zeile 43 * ----- | 1-15 | |
| A | DE 10 2021 210321 A1 (BOSCH GMBH ROBERT [DE]) 23. März 2023 (2023-03-23) * Absatz [0003] - Absatz [0043] * ----- | 1-15 | |

RECHERCHIERTE
SACHGEBIETE (IPC)

G05B
G05D
F02D

Der vorliegende Recherchenbericht wurde für alle Patentansprüche erstellt

| Recherchenort | Abschlußdatum der Recherche | Prüfer |
|---|---|---|
| Den Haag | 2. Oktober 2025 | Patsiopoulos, N |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 17 7869

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-10-2025

| Im Recherchenbericht angeführtes Patentdokument | Datum der Veröffentlichung | Mitglied(er) der Patentfamilie | Datum der Veröffentlichung |
|---|---|---|---|
| CN 113028117 A | 25-06-2021 | KEINE | |
| CN 108717259 A | 30-10-2018 | KEINE | |
| US 6078843 A | 20-06-2000 | KEINE | |
| DE 102021210321 A1 | 23-03-2023 | CN 115823324 A<br>DE 102021210321 A1<br>US 2023100963 A1 | 21-03-2023<br>23-03-2023<br>30-03-2023 |

EPO FORM P0461

Für nähere Einzelheiten zu diesem Anhang : siehe Amtsblatt des Europäischen Patentamts, Nr.12/82